# EUROPEAN PATENT APPLICATION

(11) **EP 4 763 550 A1**
(43) Date of publication of application: **24.06.2026**
(21) Application number: 24847346.4
(22) Date of filing: 22.02.2024
(51) Int. Cl.: B60H 1/22, H05B 3/00, H05B 3/16

(54) **AUTOMOTIVE HEATER AND AUTOMOTIVE HEATING DEVICE**

(30) Priority: 14.08.2023 JP 2023132051
(71) Applicant: Toshiba Lighting & Technology Corporation, Yokosuka-shi, Kanagawa 237-8510 (JP)
(72) Inventor: KATO, Satoko, Imabari-shi Ehime 7948510 (JP); TAMAI, Masahiko, Imabari-shi Ehime 7948510 (JP); AONO, Shinjiro, Imabari-shi Ehime 7948510 (JP); TSUBOUCHI, Akio, Imabari-shi Ehime 7948510 (JP); UENO, Kousuke, Imabari-shi Ehime 7948510 (JP); OHASHI, Tsuyoshi, Imabari-shi Ehime 7948510 (JP); DOI, Masahiro, Imabari-shi Ehime 7948510 (JP); MINEYAMA, Yumi, Imabari-shi Ehime 7948510 (JP); TAMURA, Kairi, Imabari-shi Ehime 7948510 (JP); SAKAI, Makoto, Imabari-shi Ehime 7948510 (JP)
(74) Representative: AWA Sweden AB
(86) International application number: PCT/JP2024/006502
(87) International publication number: WO 2025/037444

(57) **Abstract**

A vehicle heater according to an embodiment is a vehicle heater that heats a gas inside a vehicle. The vehicle heater includes: a substrate that has a plate shape, has a first surface and a second surface facing the first surface, and extends in one direction; a heat generating element that is provided on the first surface side and extends in an extension direction of the substrate; a first detection portion that is provided on the first surface side and detects a temperature of the substrate; and a first protection portion that covers the first surface side.

## Description

### [Technical Field]

Embodiments of the present invention relate to a vehicle heater and a vehicle heating device.

### [Background Art]

Conventionally, the heat (exhaust heat) from the engine coolant was used as the heat source for heating the inside of the vehicle. However, since the temperature of the cooling water has decreased as the engine efficiency has increased in recent years, it is difficult to use the exhaust heat from the engine as the heat source for heating the inside of the vehicle. Therefore, heaters that use Joule heat are becoming more widespread together with or instead of heaters that use the exhaust heat of the engine. In this case, the heaters that use Joule heat use the battery installed in the vehicle as a power source. Therefore, when the heaters that use Joule heat are used, there is a problem in that the energy allocated to the traveling or the like in the energy stored in the battery decreases.

Furthermore, in recent years, the power units of the vehicles have been replaced from an engine to a motor. For example, hybrid electric vehicles (HEVs) equipped with both an engine and a motor and electric vehicles (EVs) equipped only with a motor are becoming more widespread. In such vehicles, if heaters that use Joule heat are used, the energy allocated to traveling or the like will be further decreased, and hence it is even more difficult to extend the traveling distance.

Therefore, there is a demand for vehicle heaters capable of improving heat generation efficiency.

Further, there is another problem in vehicles in that many parts need to be provided in a limited space. Therefore, there is a demand for vehicle heaters capable of saving space.

Therefore, there is a demand for development of a technology that can improve heat generation efficiency and also save space.

### [Patent Literature]

[Patent Literature 1] JP 2014-54934 A
[Patent Literature 2] JP 2023-45947 A

### [Summary of Invention]

### [Problem to be Solved by Invention]

An object of the present invention is to provide a vehicle heater and a vehicle heating device capable of improving heat generation efficiency and saving space.

### [Means for Solving Problem]

A vehicle heater according to an embodiment is a vehicle heater that heats a gas inside a vehicle. The vehicle heater includes: a substrate that has a plate shape, has a first surface and a second surface facing the first surface, and extends in one direction; a heat generating element that is provided on the first surface side and extends in an extension direction of the substrate; a first detection portion that is provided on the first surface side and detects a temperature of the substrate; and a first protection portion that covers the first surface side.

### [Effect of Invention]

According to an embodiment of the present invention, it is possible to provide a vehicle heater and a vehicle heating device capable of improving heat generation efficiency and saving space.

### [Brief Description of Drawings]

[FIG. 1] FIG. 1 is a schematic view of a vehicle heater according to an embodiment when viewed from one side in the Z direction.
[FIG. 2] FIG. 2 is a schematic view of the vehicle heater when viewed from the other side in the Z direction.
[FIG. 3] FIG. 3 is a schematic cross-sectional view of the vehicle heater of FIG. 1 when taken along line A-A.
[FIG. 4] FIG. 4 is a schematic cross-sectional view illustrating a vehicle heater according to another embodiment.
[FIG. 5] FIG. 5 is a schematic cross-sectional view illustrating a vehicle heater according to another embodiment.
[FIG. 6] FIG. 6 is a schematic cross-sectional view illustrating a vehicle heater according to another embodiment.
[FIG. 7] FIG. 7 is a schematic view illustrating a vehicle heater according to another embodiment.
[FIG. 8] FIG. 8 is a schematic view illustrating a vehicle heater according to another embodiment.
[FIG. 9] FIG. 9 is a schematic cross-sectional view of the vehicle heater of FIG. 8 when taken along line B-B.
[FIG. 10] FIG. 10 is a schematic cross-sectional view illustrating a heating device according to this embodiment.
[FIG. 11] FIGS. 11A and 11B are schematic cross-sectional views of the heating device of FIG. 10 when taken along line C-C.
[FIG. 12] FIG. 12 is a schematic cross-sectional view illustrating a heating device according to another embodiment.
[FIG. 13] FIG. 13 is a schematic cross-sectional view illustrating a heating device according to another embodiment.

### [Embodiments of Invention]

Hereinafter, embodiments will be described with reference to the drawings. Furthermore, in each drawing, the same components are denoted by the same reference numerals and detailed description thereof will be appropriately omitted. Further, the arrows X, Y, and Z in each drawing represent three mutually perpendicular directions. For example, the long side direction of the substrate is the X direction, the short side direction (width direction) of the substrate is the Y direction, and the direction perpendicular to the surface of the substrate (thickness direction) is the Z direction.

### (Vehicle heater)

A vehicle heater 1 according to this embodiment is a vehicle heater that heats a gas inside a vehicle.

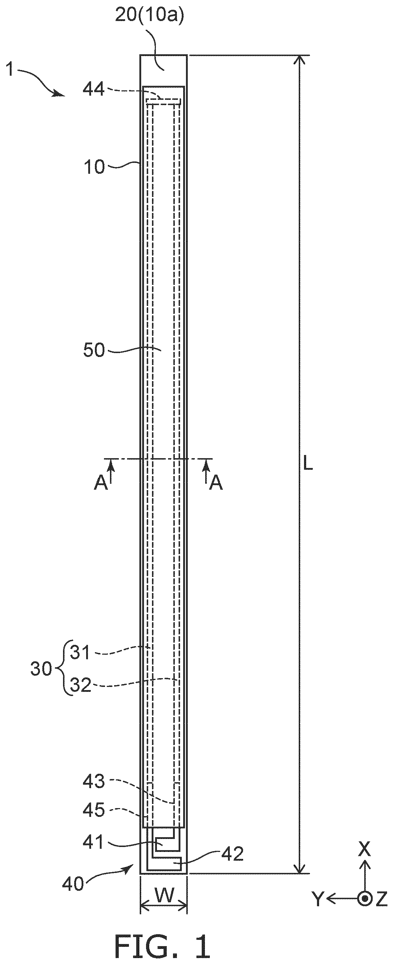

FIG. 1 is a schematic view of the vehicle heater 1 according to this embodiment when viewed from one side in the Z direction.

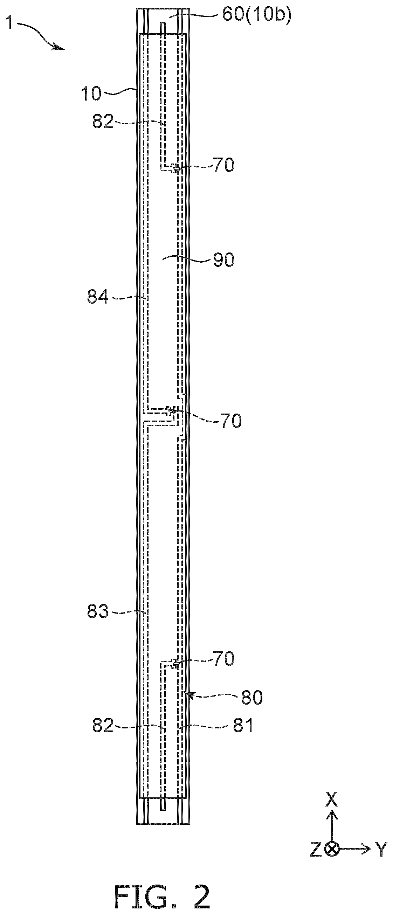

FIG. 2 is a schematic view of the vehicle heater 1 when viewed from the other side in the Z direction.

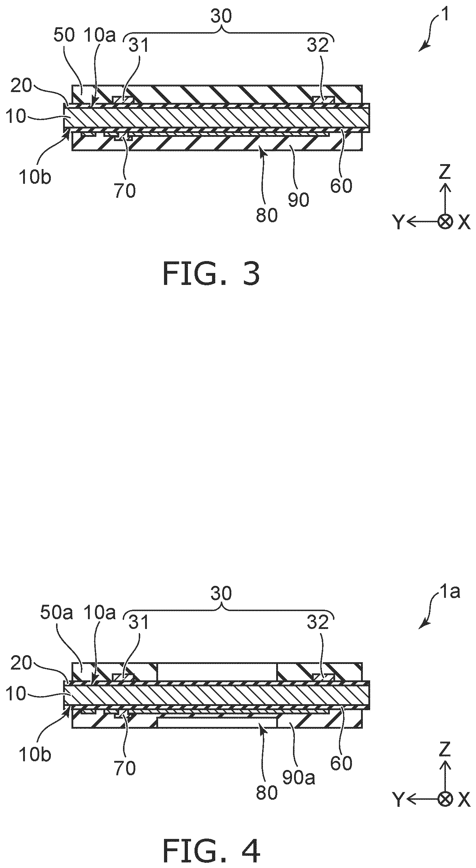

FIG. 3 is a schematic cross-sectional view of the vehicle heater 1 (hereinafter, simply referred to as the heater 1) of FIG. 1 when taken along line A-A.

As shown in FIGS. 1 to 3, the heater 1 includes, for example, a substrate 10, an insulating portion 20 (corresponding to an example of a first insulating portion), a heat generating portion 30, a wiring portion 40, a protection portion 50 (corresponding to an example of a first protection portion), an insulating portion 60 (corresponding to an example of a second insulating portion), a detection portion 70 (corresponding to an example of a first detection portion), a wiring portion 80, and a protection portion 90 (corresponding to an example of a second protection portion).

The substrate 10 has a plate shape and has a surface 10a (corresponding to an example of a first surface) and a surface 10b (corresponding to an example of a second surface) facing the surface 10a. The substrate 10 extends in one direction (for example, the X direction). The planar shape of the substrate 10 is, for example, an elongated rectangle. Furthermore, the planar shape of the substrate 10 can be appropriately changed according to the shape and the like of a housing 101 of a vehicle heating device 101 in which the heater 1 is accommodated. For example, the planar shape of the substrate 10 may be a bent shape such as an L shape, or a frame shape such as an annular shape. However, if the planar shape of the substrate 10 is rectangular, the manufacture of the substrate 10 and therefore the manufacture of the heater 1 will be facilitated.

The thickness of the substrate 10 is, for example, about 0.3 mm to 1.0 mm. The width dimension W (the dimension in the short side direction; the dimension in the Y direction) of the substrate 10 is, for example, about 5 mm to 15 mm. The length L (the dimension in the long side direction; the dimension in the X direction) of the substrate 10 can be appropriately changed according to the size and the like of the housing 101 of a vehicle heating device 100 in which the heater 1 is accommodated.

The substrate 10 is formed of a material that is heat resistant and has high thermal conductivity. The substrate 10 can be formed of, for example, metal such as stainless steel or an aluminum alloy, or an inorganic material such as ceramic.

In this case, thermal conductivity of metal is higher than that of an inorganic material such as ceramic. Therefore, if the substrate 10 is formed of metal, the time required for the heater 1 to heat up can be shortened. Further, it is also possible to improve the rigidity of the substrate 10 and decrease the manufacturing costs.

In general, since an inorganic material such as ceramic has an insulating property, the insulating portion 20 and the insulating portion 60 to be described later can be omitted if the substrate 10 is formed of an inorganic material.

Furthermore, the heater 1 illustrated in FIGS. 1 to 3 includes the substrate 10 containing metal and the insulating portion 20.

As shown in FIGS. 1 and 3, the insulating portion 20 has an insulating property and is provided on the surface 10a of the substrate 10. The insulating portion 20 extends in the long side direction (X direction) of the substrate 10. The insulating portion 20 is provided to insulate the conductive substrate 10 from the heat generating portion 30 and the wiring portion 40. Therefore, the insulating portion 20 covers at least a region provided with the heat generating portion 30 and the wiring portion 40 in the surface 10a of the substrate 10. The thickness of the insulating portion 20 is not particularly limited if the insulating property can be ensured. The insulating portion 20 is formed of a heat-resistant and insulating material. The insulating portion 20 can be formed of, for example, a ceramic or glass material. The insulating portion 20 can be formed by, for example, thermal spraying or sintering.

The heat generating portion 30 converts the applied power into heat (Joule heat). The heat generating portion 30 is provided, for example, on the surface 10a side of the substrate 10. When the substrate 10 is formed of metal, the heat generating portion 30 is provided on the insulating portion 20 (the surface on the opposite side to the substrate 10 in the insulating portion 20). When the substrate 10 is formed of insulating ceramics and the like, the heat generating portion 30 is provided on the surface 10a of the substrate 10.

The heat generating portion 30 has, for example, heat generating elements 31 and 32. Furthermore, although the case where the heat generating elements 31 and 32 are provided has been illustrated as an example, the number and size of the heat generating elements can be appropriately changed depending on the size of the substrate 10, the required heat amount, and the like. In addition, multiple types of heat generating elements with different lengths, widths, shapes, and the like can be provided. That is, at least one heat generating element may be provided. Further, although the case where the heat generating elements 31 and 32 are connected in series has been illustrated, a plurality of heat generating elements may be connected in parallel, or a plurality of heat generating elements may be connected in series and parallel. The method of connecting the plurality of heat generating elements can be appropriately changed depending on the size of the substrate 10 and the required heat amount.

The heat generating elements 31 and 32 can be arranged, for example, at a predetermined interval in the Y direction (the short side direction of the substrate 10). The heat generating elements 31 and 32 extend, for example, in the X direction (the long side direction of the substrate 10).

The dimensions (length dimensions) of the heat generating elements 31 and 32 in the X direction can be, for example, substantially the same or different.

Further, the electrical resistance value per unit length of the heat generating elements 31 and 32 can be substantially uniform or different in the X direction. For example, the dimensions (width dimension) in the Y direction and the dimensions (thickness dimension) in the Z direction of the heat generating elements 31 and 32 can be substantially constant. In this case, the shape of the heat generating elements 31 and 32 as viewed from the Z direction can be, for example, a substantially rectangular shape extending in the X direction.

The heat generating elements 31 and 32 can be formed using, for example, ruthenium oxide (RuO₂), a silver-palladium (Ag-Pd) alloy, a silver-platinum (Ag-Pt) alloy, and the like. The heat generating elements 31 and 32 can be formed, for example, by applying a paste-like material onto the insulating portion 20 using a screen printing method and the like, and then curing the resultant using a baking method and the like.

When the substrate 10 is formed of an insulating material, the heat generating elements 31 and 32 can be formed, for example, by applying a paste-like material onto the surface 10a of the substrate 10 using a screen printing method and the like, and then curing the resultant using a baking method and the like.

The wiring portion 40 is provided on the surface 10a side of the substrate 10. When the substrate 10 is formed of metal, the wiring portion 40 is provided on the insulating portion 20. When the substrate 10 is formed of an insulating material, the wiring portion 40 is provided on the surface 10a of the substrate 10.

The wiring portion 40 has, for example, a terminal 41, a terminal 42, a wiring 43, a wiring 44, and a wiring 45.

The terminals 41 and 42 are provided, for example, near one end of the substrate 10 in the X direction. The terminals 41 and 42 are arranged, for example, in the X direction and the Y direction. The terminals 41 and 42 are electrically connected to, for example, a controller 103 of the vehicle heating device 100 (described later) via a connector, wiring, and the like.

The wiring 43 is provided, for example, in the X direction on the side of the substrate 10 on which the terminal 41 is provided. The wiring 43 extends in the X direction. The wiring 43 is electrically connected to the terminal 41 and the end of the heat generating element 32 on the terminal 41 side.

The wiring 44 is provided, for example, in the X direction near the end of the substrate 10 opposite to the side on which the terminals 41 and 42 are provided. The wiring 44 is electrically connected to the end of the heat generating element 31 opposite to the wiring 45 and the end of the heat generating element 32 opposite to the wiring 43.

The wiring 45 is provided, for example, in the X direction on the side of the substrate 10 on which the terminal 42 is provided. The wiring 45 extends in the X direction. The wiring 45 is electrically connected to the terminal 42 and the end of the heat generating element 31 on the terminal 42 side.

The wiring portion 40 (the terminal 41, the terminal 42, the wiring 43, the wiring 44, and the wiring 45) is formed using a material including, for example, silver or copper. For example, the terminal 41, the terminal 42, the wiring 43, the wiring 44, and the wiring 45 can be formed by applying a paste-like material onto the insulating portion 20 using a screen printing method and the like, and then curing the resultant using a baking method and the like.

Furthermore, when the substrate 10 is formed of an insulating material, the terminal 41, the terminal 42, the wiring 43, the wiring 44, and the wiring 45 are formed, for example, by applying a paste-like material onto the surface 10a of the substrate 10 using a screen printing method and the like, and then curing the resultant using a baking method and the like.

The protection portion 50 covers the surface 10a side of the substrate 10. For example, the protection portion 50 is provided on the insulating portion 20. When the substrate 10 is formed of an insulating material, the protection portion 50 is provided on the surface 10a of the substrate 10. The protection portion 50 extends in the X direction. The protection portion 50 covers the heat generating portion 30 (the heat generating elements 31 and 32) and a part of the wiring portion 40 (the wiring 43, the wiring 44, and the wiring 45). In this case, the terminals 41 and 42 of the wiring portion 40 are exposed from the protection portion 50.

The protection portion 50 has, for example, a function of insulating the heat generating portion 30, the wiring 43, the wiring 44, and the wiring 45, a function of transmitting the heat generated in the heat generating portion 30 to the outside, and a function of protecting the heat generating portion 30, the wiring 43, the wiring 44, and the wiring 45 from external forces, corrosive gases, and the like.

The protection portion 50 is formed of a material that has heat resistance and insulating properties, and has high chemical stability and thermal conductivity. The protection portion 50 is formed of, for example, a glass material. In this case, the protection portion 50 can be formed using a glass material to which a filler containing a material with high thermal conductivity, such as aluminum oxide, has been added. Thermal conductivity of the glass material to which the filler is added can be, for example, 2 [W/(meK)] or more. The thickness of the protection portion 50 can be, for example, about 10 µm to 60 µm.
the protection portion 50 can be formed, for example, by applying a paste-like material onto the insulating portion 20, the heat generating portion 30, the wiring 43, the wiring 44, and the wiring 45 using a screen printing method and the like, and then curing the resultant using a baking method and the like. In this case, the terminals 41 and 42 are exposed from the protection portion 50.

As shown in FIGS. 2 and 3, the insulating portion 60 has an insulating property and is provided on the surface 10b of the substrate 10. The insulating portion 60 extends in the long side direction (X direction) of the substrate 10. The insulating portion 60 is provided to insulate the conductive substrate 10 from the detection portion 70 and the wiring portion 80. Therefore, the insulating portion 60 covers at least a region provided with the detection portion 70 and the wiring portion 80 in the surface 10a of the substrate 10. The insulating portion 60 is formed of a heat-resistant and insulating material. The material and the method of forming the insulating portion 60 can be the same as the material and the method of forming the insulating portion 20 described above.

The detection portion 70 detects the temperature of the substrate 10 and therefore the temperature of the heat generating portion 30. The detection portion 70 can be, for example, a thermistor, a thermocouple, a resistance temperature detector, and the like. The detection portion 70 illustrated in FIGS. 2 and 3 is a thermistor. In this case, the thermistor can be formed, for example, by applying a paste-like material to a predetermined position of the wiring portion 80 using a screen printing method and the like, and then curing the resultant using a baking method and the like. Thermistor material may include, for example, manganese and cobalt, and any one of copper and nickel. The sheet resistance of thermistor can be, for example, about 100 kΩ/sq to 10,000 kΩ/sq, and the value of the B constant can be about 2,500K to 4,000K.

When the substrate 10 is formed of metal, the detection portion 70 is provided on the insulating portion 60 (on the surface of the insulating portion 60 opposite to the substrate 10). When the substrate 10 is formed of an insulating material, the detection portion 70 is provided on the surface 10b of the substrate 10. At least one detection portion 70 can be provided. The heater 1 illustrated in FIGS. 2 and 3 is provided with three detection portions 70.

When a plurality of detection portions 70 are provided, the plurality of detection portions 70 can be arranged at predetermined intervals in the long side direction (X direction) of the substrate 10 as shown in FIG. 2. Further, the plurality of detection portions 70 can be arranged at predetermined intervals in the long side direction (X direction) of the substrate 10 and the short side direction (Y direction) of the substrate 10. In this way, the in-plane temperature of the substrate 10 and therefore the in-plane temperature of the heater 1 can be detected. The number, intervals, arrangement, and the like of the detection portion 70 can be appropriately changed depending on, for example, the size of the heater 1 (substrate 10) and the like. The number, intervals, arrangement, and the like of the detection portions 70 can be appropriately determined by conducting, for example, experiments or simulations.

The wiring portion 80 is provided on the surface 10b side of the substrate 10. When the substrate 10 is formed of metal, the wiring portion 80 is provided on the insulating portion 60. When the substrate 10 is formed of an insulating material, the wiring portion 80 is provided on the surface 10b of the substrate 10.

As shown in FIG. 2, the wiring portion 80 has, for example, a wiring 81, a wiring 82, a wiring 83, and a wiring 84.

The wiring 81 is provided, for example, in the short side direction (Y direction) of the substrate 10 near one peripheral edge of the surface 10b. The wiring 81 extends in the long side direction (X direction) of the substrate 10 along one peripheral edge of the surface 10b. The wiring 81 is electrically connected to two detection portions 70. Both ends of the wiring 81 are exposed from the protection portion 90.

The wiring 82 can be provided, for example, in each of two detection portions 70. In this case, one wiring 82 can be provided on one end side of the substrate 10 and the other wiring 82 can be provided on the other end side of the substrate 10 in the long side direction (X direction) of the substrate 10. The wiring 82 is disposed, for example, in the short side direction (Y direction) of the substrate 10 next to the wiring 81 at a predetermined distance. The wiring 82 extends, for example, in the long side direction (X direction) of the substrate 10 in parallel to the wiring 81. One end of the wiring 82 is electrically connected to the detection portion 70. The other end of the wiring 82 is exposed from the protection portion 90.

The wiring 83 is provided, for example, in the short side direction (Y direction) of the substrate 10 near the other peripheral edge of the surface 10b. The wiring 83 extends in the long side direction (X direction) of the substrate 10 along the other peripheral edge of the surface 10b. One end of the wiring 83 is electrically connected to the detection portion 70. The other end of the wiring 83 is exposed from the protection portion 90.

The wiring 84 is provided, for example, in the short side direction (Y direction) of the substrate 10 near the other peripheral edge of the surface 10b. The wiring 84 extends in the long side direction (X direction) of the substrate 10 along the other peripheral edge of the surface 10b. One end of the wiring 84 is electrically connected to the detection portion 70. The other end of the wiring 84 is exposed from the protection portion 90. In the long side direction (X direction) of the substrate 10, the wiring 84 can be provided on the side opposite to the wiring 83 with the detection portion 70 interposed therebetween.

The material and method of forming the wiring portion 80 (the wiring 81, the wiring 82, the wiring 83, and the wiring 84) can be the same as, for example, the material and the method of forming the wiring portion 40 described above. The number, arrangement, and planar shape of the wiring 81, the wiring 82, the wiring 83, and the wiring 84 can be appropriately changed depending on the number, arrangement, and the like of the detection portion 70.

As shown in FIGS. 2 and 3, the protection portion 90 covers the surface 10b side of the substrate 10. For example, the protection portion 90 is provided on the insulating portion 60. When the substrate 10 is formed of an insulating material, the protection portion 90 is provided on the surface 10b of the substrate 10. The protection portion 90 extends in the X direction. The protection portion 90 covers the detection portion 70, and the wiring portion 80 (the wiring 81, the wiring 82, the wiring 83, and the wiring 84). In this case, the vicinities of end portions of the wiring 81, the wiring 82, the wiring 83, and the wiring 84 are exposed from the protection portion 90.

The protection portion 90 has, for example, a function of insulating the detection portion 70 and the wiring portion 80 and a function of protecting the detection portion 70 and the wiring portion 80 from external forces, corrosive gases, and the like. The material of the protection portion 90 can be the same as or different from the material of the protection portion 50 described above. The method of forming the protection portion 90 can be, for example, the same as the method of forming the protection portion 50 described above. The thickness of the protection portion 90 can be, for example, about 10 µm to 60 µm.

Here, when the heater 1 is used or when the heater 1 is manufactured (for example, when the protection portions 50 and 90 are baked), thermal stress occurs due to differences in thermal expansion coefficients of the materials. Therefore, thermal stress may cause warping in the heater 1. If the heater 1 warps, the heater 1 may become deformed or become easily damaged.

In the heater 1 according to this embodiment, as shown in FIG. 3, the insulating portion 20 and the protection portion 50 are provided on the surface 10a side of the substrate 10. The insulating portion 60 and the protection portion 90 are provided on the surface 10b side of the substrate 10. Therefore, thermal stress caused by the difference in thermal expansion coefficient between the material of the substrate 10 and the materials of the insulating portion 20 and the protection portion 50 on the surface 10a side of the substrate 10 can be offset by thermal stress caused by the difference in thermal expansion coefficient between the material of the substrate 10 and the materials of the insulating portion 60 and the protection portion 90 on the surface 10b side of the substrate 10. If thermal stress is offset, the occurrence of warping in the heater 1 can be suppressed.

In this case, when the material of the insulating portion 20 is the same as the material of the insulating portion 60 and the material of the protection portion 50 is the same as the material of the protection portion 90, thermal stress occurring on the surface 10a side of the substrate 10 and thermal stress occurring on the surface 10b side of the substrate 10 will be substantially the same. Therefore, the occurrence of warping in the heater 1 can be further suppressed. Furthermore, this also applies to the case where the substrate 10 is formed of an insulating material and the insulating portions 20 and 60 are omitted.

Further, although the case where the heat generating elements 31 and 32 are provided on the surface 10a side of the substrate 10 has been illustrated, the heat generating elements 31 and 32 can also be provided on the surface 10b side of the substrate 10. That is, the heat generating elements 31 and 32 can be provided on at least one of the surface 10a side of the substrate 10 and the surface 10b side of the substrate 10.

Further, although the case where the detection portion 70 is provided on the surface 10b side of the substrate 10 has been illustrated, the detection portion 70 can also be provided on the surface 10a side of the substrate 10. That is, the detection portion 70 can be provided on at least one of the surface 10a side of the substrate 10 and the surface 10b side of the substrate 10.

Here, as will be described later, the heater 1 is provided inside the housing 101 of the vehicle heating device 100 and heats a gas (for example, air) flowing inside the housing 101. Therefore, the surfaces of the protection portion 50 and the protection portion 90 come into contact with the gas flowing inside the housing 101. In this case, when at least one of the surface area of the protection portion 50 and the surface area of the protection portion 90 is increased, the amount of heat dissipated from the heater 1 to the gas can be increased.

For example, at least one of the surface roughness of the surface of the protection portion 50 and the surface roughness of the surface of the protection portion 90 may be increased.

For example, it is preferable that at least one of the maximum height roughness Rz of the surface of the protection portion 50 and the maximum height roughness Rz of the surface of the protection portion 90 is in the range of "0.3 µm≤Rz≤5 µm". In this way, since the amount of heat dissipated from the heater 1 to the gas can be increased, the heat generation efficiency can be improved.

In this case, at least one of the maximum height roughness Rz of the surface of the protection portion 50 and the maximum height roughness Rz of the surface of the protection portion 90 can be more preferably set to "2 µm≤Rz≤5 µm", and even more preferably set to "3 µm≤Rz≤5 µm". In this way, since the amount of heat dissipated from the heater 1 to the gas can be further increased, the heat generation efficiency can be further improved.

Further, the above-described surface roughness can be set to the surface roughness of the surface facing at least the surface 10a of the substrate 10 in the protection portion 50. Furthermore, the surface roughness of the entire surface of the protection portion 50 may be as described above.

Further, the above-described surface roughness can be set to the surface roughness of the surface facing at least the surface 10b of the substrate 10 in the protection portion 90. Furthermore, the surface roughness of the entire surface of the protection portion 50 may be as described above.

Further, as shown in FIGS. 1 to 3, the heater 1 according to this embodiment includes the substrate 10 which has a plate shape and the insulating portion 20, the heat generating portion 30, the wiring portion 40, the protection portion 50, the insulating portion 60, the detection portion 70, the wiring portion 80, and the protection portion 90 which are provided on the surface of the substrate 10 in the form of a film. Therefore, the heater 1 can be easily miniaturized. Further, the planar shape of the plate-shaped substrate 10 can be changed as desired to match, for example, the shape of the housing 101 of the vehicle heating device 100. Therefore, it is easy to achieve space saving.

As described above, the heater 1 according to this embodiment can improve the heat generation efficiency and can also save space.

FIG. 4 is a schematic cross-sectional view illustrating a heater 1a according to another embodiment.

Furthermore, FIG. 4 is a view corresponding to FIG. 3 described above.

As shown in FIG. 4, a protection portion 50a covers the heat generating element 31, the heat generating element 32, the wiring 43, the wiring 44, and the wiring 45, and does not cover the region of the insulating portion 20 not provided with the heat generating elements 31 and 32 to decrease the thickness of the protection portion 50a at this portion. In this way, since the surface area of the protection portion 50a can be further increased, the amount of heat dissipated from the heater 1a to the gas can be further increased. Therefore, the heat generation efficiency can be further improved.

Further, a protection portion 90a covers the detection portion 70 and the wiring portion 80 (the wiring 81, the wiring 82, the wiring 83, and the wiring 84) and does not cover the region not provided with the wiring portion 80 in the insulating portion 60 to decrease the thickness of the protection portion 90a at this portion. In this way, since the surface area of the protection portion 90a can be further increased, the amount of heat dissipated from the heater 1a to the gas can be further increased. Therefore, the heat generation efficiency can be further improved.

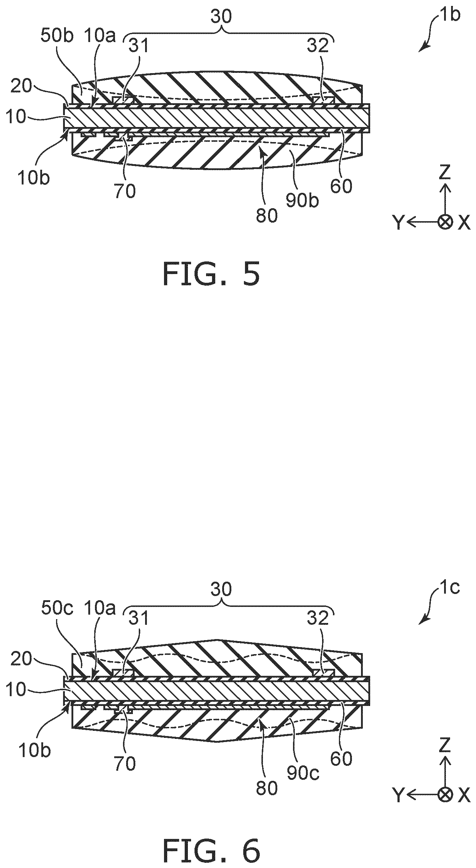

FIG. 5 is a schematic cross-sectional view illustrating a heater 1b according to another embodiment.

Furthermore, FIG. 5 is a view corresponding to FIG. 3 described above.

As shown in FIG. 5, the surface of a protection portion 50b facing the surface 10a of the substrate 10 can be a convex curved surface or a concave curved surface. In this way, since the surface area of the protection portion 50b can be further increased, the amount of heat dissipated from the heater 1b to the gas can be further increased. Therefore, the heat generation efficiency can be further improved.

Further, the surface of a protection portion 90b facing the surface 10b of the substrate 10 can be a convex curved surface or a concave curved surface. In this way, since the surface area of the protection portion 90b can be further increased, the amount of heat dissipated from the heater 1b to the gas can be further increased. Therefore, the heat generation efficiency can be further improved.

FIG. 6 is a schematic cross-sectional view illustrating a heater 1c according to another embodiment.

Furthermore, FIG. 6 is a view corresponding to FIG. 3 described above.

As shown in FIG. 6, the surface of a protection portion 50c facing the surface 10a of the substrate 10 can have at least one convex portion. In this way, since the surface area of the protection portion 50c can be further increased, the amount of heat dissipated from the heater 1c to the gas can be further increased. Therefore, the heat generation efficiency can be further improved.

Further, the surface of a protection portion 90c facing the surface 10b of the substrate 10 can have at least one convex portion. In this way, since the surface area of the protection portion 90c can be further increased, the amount of heat dissipated from the heater 1c to the gas can be further increased. Therefore, the heat generation efficiency can be further improved.

However, as shown in FIG. 3, it is preferable that the thickness of the protection portion 50 is substantially uniform and the surface roughness of the protection portion 50 is large. Further, it is preferable that the thickness of the protection portion 90 is substantially uniform and the surface roughness of the protection portion 90 is large. Since it is possible to suppress an increase in the heat capacity of the heater 1 when the thickness of the protection portion 50 and the thickness of the protection portion 90 are substantially uniform, it is possible to increase the responsiveness of the heater 1. When the responsiveness of the heater 1 is high, the time required for the gas to reach a predetermined temperature can be shortened.

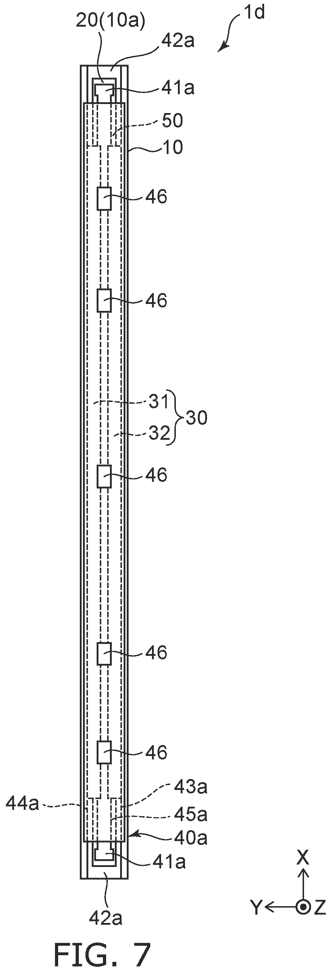

FIG. 7 is a schematic view illustrating a heater 1d according to another embodiment.

FIG. 7 is a view corresponding to FIG. 1 described above.

As shown in FIG. 7, a wiring portion 40a is provided on the surface 10a side of the substrate 10. When the substrate 10 is formed of metal, the wiring portion 40a is provided on the insulating portion 20. When the substrate 10 is formed of an insulating material, the wiring portion 40a is provided on the surface 10a of the substrate 10.

The wiring portion 40a has, for example, a terminal 41a, a terminal 42a, a wiring 43a, a wiring 44a, a wiring 45a, and a terminal 46.

The terminal 41a and the terminal 42a are provided, for example, near both ends of the substrate 10 in the X direction. The terminal 41a and the terminal 42a are arranged, for example, in the X direction. The terminal 41a is electrically connected to the wiring 45a. The terminal 42a is electrically connected to the wiring 43a and the wiring 44a.

The wiring 43a extends in the X direction along one peripheral edge of the substrate 10 in the Y direction.

The wiring 44a extends in the X direction along the other peripheral edge of the substrate 10 in the Y direction.

The wiring 45a is provided between the wiring 43a and the wiring 44a in the Y direction, and extends in the X direction.

The heat generating element 32 extending in the X direction is provided between the wiring 43a and the wiring 45a in the Y direction. The wiring 43a and the wiring 45a are electrically connected to the heat generating element 32 in the Y direction.

The heat generating element 31 extending in the X direction is provided between the wiring 44a and the wiring 45a in the Y direction. The wiring 44a and the wiring 45a are electrically connected to the heat generating element 31 in the Y direction.

The plurality of terminals 46 are electrically connected to the heat generating element 31, the heat generating element 32, and the wiring 45a. The plurality of terminals 46 are arranged in the X direction at predetermined intervals.

The terminal 41a, the terminal 42a, and the plurality of terminals 46 are electrically connected to, for example, the controller 103 of the vehicle heating device 100 to be described later via a connector, wiring, and the like.

In this way, the heat generating region (heat generating area) of the heat generating elements 31 and 32 can be changed. For example, when a voltage is applied to the terminal 41a and the terminal 42a, heat can be generated in the entire region of the heat generating elements 31 and 32. For example, when power is applied to one terminal 42a and the selected terminal 46, it is possible to generate heat in the region between one terminal 42a and the selected terminal 46 in the heat generating elements 31 and 32. If the heat generating region can be changed, the heat generation amount and therefore the temperature of the heated gas can be changed.

In this case, when the applied power is substantially constant and the temperature of the heated gas can be controlled by changing the heat generating region, the heat generation efficiency can be increased compared to when the temperature of the gas is controlled by changing the applied power. Further, the control circuit can be simplified.

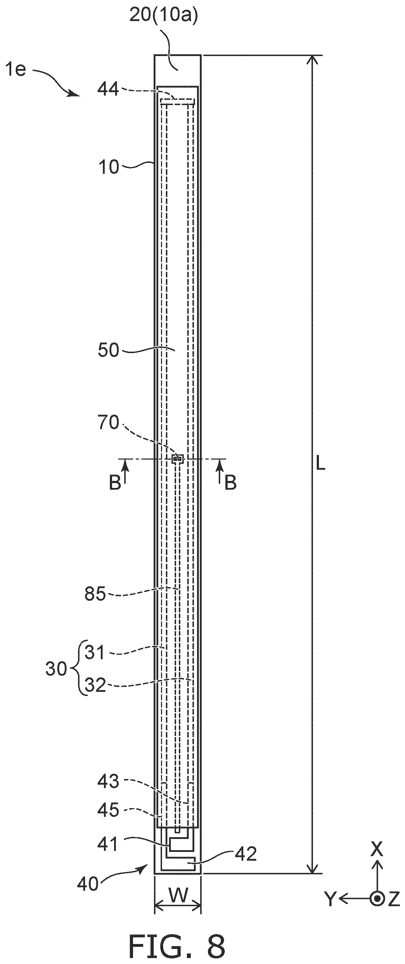

FIG. 8 is a schematic view illustrating a heater 1e according to another embodiment.

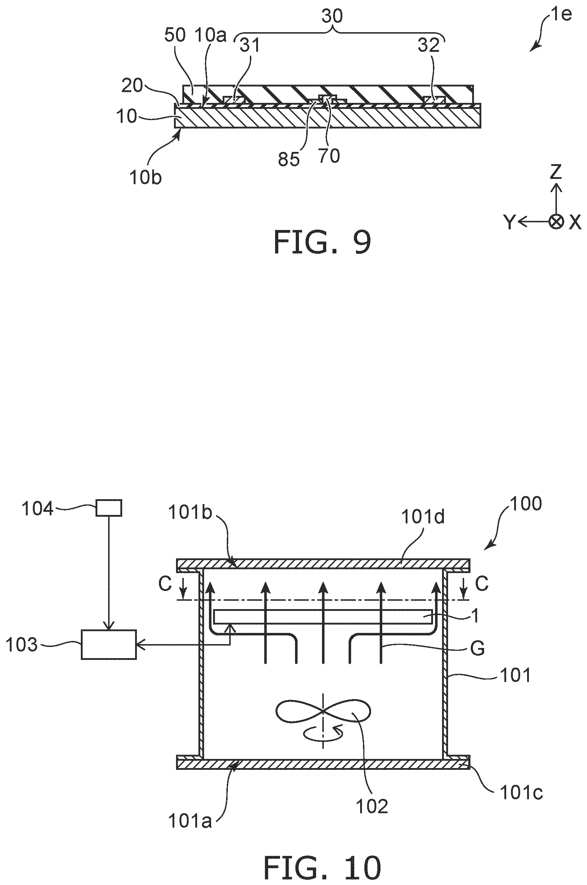

FIG. 9 is a schematic cross-sectional view of the heater 1e of FIG. 8 when taken along line B-B.

As shown in FIG. 8, the heater 1e includes, for example, the substrate 10, the insulating portion 20, the heat generating portion 30, the wiring portion 40, the protection portion 50, the detection portion 70, and a wiring 85.

Further, as shown in FIG. 9, the insulating portion 20, the heat generating portion 30, the wiring portion 40, the protection portion 50, the detection portion 70, and the wiring 85 are provided on the surface 10a of the substrate 10, and are not provided on the surface 10b of the substrate 10.

The detection portion 70 can be provided on the insulating portion 20. The detection portion 70 is electrically connected to the wiring 85. The detection portion 70 and the wiring 85 are covered by the protection portion 50. The vicinity of the end of the wiring 85 is exposed from the protection portion 50.

For example, the surface roughness of the surface of the protection portion 50 may be increased.

For example, the maximum height roughness Rz of the surface of the protection portion 50 is preferably set to "0.3 µm≤Rz≤5 µm". In this way, since the amount of heat dissipated from the heater 1e to the gas can be further increased, the heat generation efficiency can be improved.

In this case, the maximum height roughness Rz of the surface of the protection portion 50 can be more preferably set to "2 µm≤Rz≤ 5 µm", and even more preferably set to "3 µm≤Rz≤5 µm". In this way, since the amount of heat dissipated from the heater 1e to the gas can be further increased, the heat generation efficiency can be further improved.

The number, intervals, arrangement, and the like of the detection portion 70 can be appropriately changed depending on, for example, the size and the like of the heater 1e (the substrate 10). The number, intervals, arrangement, and the like of the detection portion 70 can be appropriately determined by conducting, for example, experiments or simulations.

The material and method of forming the wiring 85 can be the same as, for example, the material and the method of forming the wiring portion 40 described above. The number, arrangement, and planar shape of the wiring 85 can be appropriately changed depending on the number, arrangement, and the like of the detection portion 70.

Furthermore, instead of the protection portion 50, the protection portion 50b having a convex curved surface or concave curved surface can be provided or the protection portion 50c having at least one convex portion can be provided.

In the heater 1e, since the insulating portion 20, the heat generating portion 30, the wiring portion 40, the protection portion 50, the detection portion 70, and the wiring 85 are provided on one surface 10a of the substrate 10, the dimension of the heater 1e in the Z direction can be decreased. Therefore, the heater 1e can be easily installed in a small space inside the vehicle compartment. Further, the vehicle heating device 100 can be decreased in size as described below. Further, the insulating portion 60 and the protection portion 90 can be omitted or the wiring 85 and the wiring portion 40 can be formed by the same step. Therefore, the manufacturing costs of the heater 1e can be decreased.

### (Vehicle heating device)

In one embodiment of the present invention, the vehicle heating device 100 with the heater 1 can be provided. The above description of the heater 1 and modification of the heater 1 (for example, the heaters 1a to 1d, heaters that have been modified by a person skilled in the art with appropriate additions, deletions, or design changes of components, and heaters that have the features of the present invention) can all be applied to the vehicle heating device 100.

The vehicle heating device 100 (hereinafter, simply referred to as the heating device 100) can be provided, for example, inside an automobile or a train. The heating device 100 can be, for example, a heater that heats a gas G (for example, air) present inside the vehicle.

FIG. 10 is a schematic cross-sectional view illustrating the heating device 100 according to this embodiment.

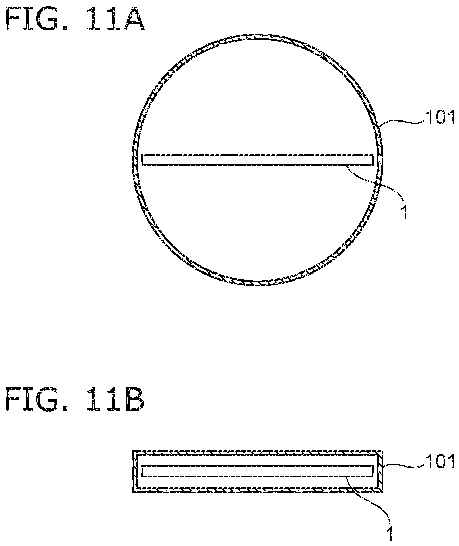

FIGS. 11A and 11B are schematic cross-sectional views of the heating device 100 of FIG. 10 when taken along line C-C.

As shown in FIG. 10, the heating device 100 includes, for example, the heater 1, the housing 101, a blowing portion 102, the controller 103, and a detection portion 104 (corresponding to an example of a second detection portion).

The heater 1 is provided inside the housing 101. The heater 1 can be attached to an inner wall or the like of the housing 101 via, for example, a bracket and the like. Furthermore, in FIG. 10 and FIGS. 11A and 11B, a case where one heater 1 is provided is illustrated as an example, but the number of heaters 1 can be appropriately changed depending on the processing flow rate of the gas G and the like. That is, at least one heater 1 may be provided. When a plurality of heaters 1 are provided, the plurality of heaters 1 can be arranged at predetermined intervals in the flow direction of the gas G. Further, the plurality of heaters 1 can be arranged at predetermined intervals in a direction perpendicular to the flow direction of the gas G. When the plurality of heaters 1 are provided, the planar dimensions and planar shapes of the heaters 1 may be the same or different.

The housing 101 has, for example, a box shape and has an intake port 101a and an exhaust port 101b. For example, the intake port 101a and the exhaust port 101b can be provided at positions facing each other. For example, the housing 101 may have a cylindrical shape. Although the housing 101 extending in one direction has been illustrated, the shape of the housing 101 is not limited to the illustrated example. The shape of the housing 101 can be appropriately changed according to the space inside the vehicle in which the heating device 100 is installed.

Further, the intake port 101a can be provided with a filter 101c. The filter 101c has air permeability and can capture, for example, visible dust.

Further, the exhaust port 101b may be provided with a so-called finger guard 101d. Furthermore, the filter 101c can be provided in place of the finger guard 101d.

As shown in FIG. 11A, the outline of the housing 101 in a direction perpendicular to the flow direction of the gas G can be, for example, a circle. In this way, since the passage resistance of the gas G can be decreased, the flow of the gas G becomes smooth and therefore the processing flow rate easily increases.

Further, as shown in FIG. 11B, the outline of the housing 101 in a direction perpendicular to the flow direction of the gas G can be, for example, a square. In this way, since the dimension between the inner wall of the housing 101 and the heater 1 can be substantially uniform, it is easy to substantially uniformly heat the gas G flowing inside the housing 101.

The blowing portion 102 forms an air current that flows inside the housing 101 provided with the heater 1. The blowing portion 102 is provided, for example, inside the housing 101. The blowing portion 102 can be provided, for example, in a region between the intake port 101a and the heater 1. The blowing portion 102 sucks the gas G inside the vehicle into the housing 101 via the filter 101c and the intake port 101a. The gas G sucked into the housing 101 is discharged to the outside of the heating device 100 via the exhaust port 101b of the housing 101. Therefore, a flow of the gas G directed from the intake port 101a toward the exhaust port 101b is formed inside the housing 101. Furthermore, in FIG. 10, the case where the blowing portion 102 is an axial blowing portion has been illustrated, but the type of the blowing portion 102 can be changed as appropriate. The blowing portion 102 may be, for example, a centrifugal blowing portion or a cross-flow blowing portion. Further, the arrangement of the blowing portion 102 can be appropriately changed. For example, the blowing portion 102 may be provided outside the housing 101.

The controller 103 is provided, for example, outside the housing 101. The controller 103 is electrically connected to the heater 1. The controller 103 is electrically connected to, for example, the heat generating element 31, the heat generating element 32, and the detection portion 70 provided in the heater 1.

Further, the controller 103 is electrically connected to the detection portion 104 provided outside the housing 101. Further, the controller 103 is electrically connected to the blowing portion 102.

The detection portion 104 detects the temperature of the atmosphere outside the housing 101 (the temperature of the atmosphere inside the vehicle). The detection portion 104 may be, for example, a thermistor, a thermocouple, or a resistance temperature detector.

Next, the operation of the heating device 100 will be illustrated.

As shown in FIG. 10, the gas G sucked into the housing 101 by the blowing portion 102 flows along the surface of the heater 1 when the gas reaches the heater 1. The gas G flowing along the surface of the heater 1 flows from the peripheral edge of the heater 1 toward the exhaust port 101b of the housing 101. When the gas G flows along the surface of the heater 1, the temperature of the gas G increases due to the heat from the heater 1. The gas G whose temperature has increased is discharged through the exhaust port 101b into, for example, the atmosphere in which the heating device 100 is provided.

In this case, when the temperature detected by the detection portion 104 is lower than the set temperature, the controller 103 applies power to the heat generating elements 31 and 32 to generate heat from the heat generating elements 31 and 32. Furthermore, the set temperature is a temperature inputted into the controller 103 by the driver or the like.

The controller 103 controls the heating of the heat generating elements 31 and 32 based on the difference between the temperature detected by the detection portion 104 and the set temperature. For example, the controller 103 controls the heating of the heat generating elements 31 and 32 so that the temperature detected by the detection portion 104 (the temperature of the atmosphere inside the vehicle) approaches the set temperature by performing PID control.

Further, the controller 103 can further control the heating of the heat generating elements 31 and 32 based on the temperature detected by the detection portion 70 provided in the heater 1. For example, when the temperature of the heat generating elements 31 and 32 is too high, the heat generating elements 31 and 32 may fail. Therefore, the controller 103 can control the heating of the heat generating elements 31 and 32 so that the temperature detected by the detection portion 70 falls within a predetermined range.

Further, as shown in FIG. 7, when a plurality of terminals 46 for applying power are provided, the controller 103 can change the heat generating region of the heat generating elements 31 and 32 by appropriately selecting the terminal 46 for applying power. Accordingly, the heat generation amount and therefore the temperature of the heated gas G can be controlled.

Further, the controller 103 can control the amount of air blown by the blowing portion 102 when controlling the heating of the heat generating elements 31 and 32. In this case, the controller 103 can control the blowing amount of the gas G by controlling the rotation speed of the blowing portion 102. For example, since the blowing amount decreases when decreasing the rotation speed of the blowing portion 102, the temperature of the gas G discharged from the exhaust port 101b can be increased. Since the blowing amount increases when increasing the rotation speed of the blowing portion 102, the temperature of the gas G discharged from the exhaust port 101b can be decreased.

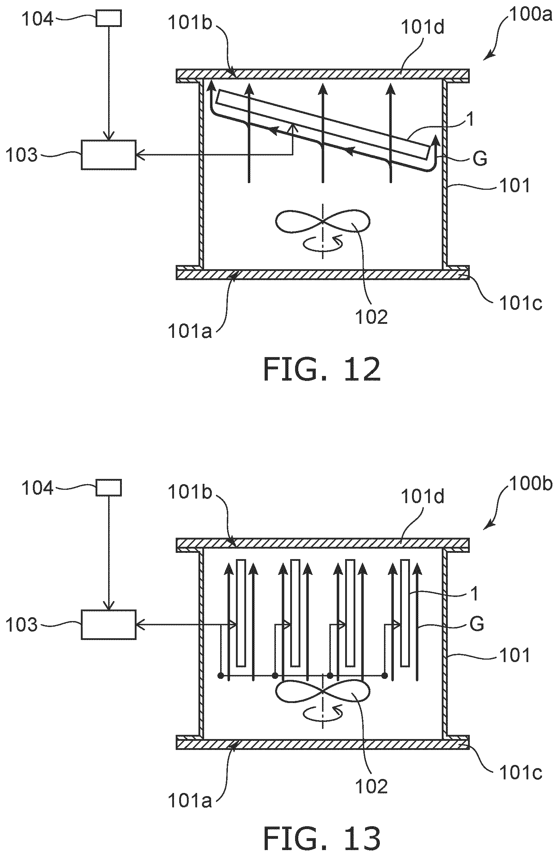

FIG. 12 is a schematic cross-sectional view illustrating a heating device 100a according to another embodiment.

In the case of the heating device 100 illustrated in FIG. 10, the extension direction of the heater 1 is substantially perpendicular to the flow direction of the gas G sucked into the housing 101. In contrast, in the case of the heating device 100a, as shown in FIG. 12, the extension direction of the heater 1 is inclined with respect to the flow direction of the gas G sucked into the housing 101. In this way, since the amount of the gas G flowing along the surface of the heater 1 can be increased as shown in FIG. 12, the heat generation efficiency can be further improved.

FIG. 13 is a schematic cross-sectional view illustrating a heating device 100b according to another embodiment.

As shown in FIG. 13, the extension direction of the heater 1 can be substantially parallel to the flow direction of the gas G sucked into the housing 101. In this way, since the amount of the gas G flowing along the surface of the heater 1 can be increased as shown in FIG. 13, the heat generation efficiency can be further improved. Further, the number of the heaters 1 provided inside the housing 101 can be increased. The dimension of the housing 101 in a direction substantially perpendicular to the flow direction of the sucked gas G can be decreased. Therefore, the heating device 100b can be decreased in size.

Although several embodiments of the present invention have been illustrated above, these embodiments are presented as examples and are not intended to limit the scope of the invention. These new embodiments can be implemented in various other forms, and various omissions, substitutions, modifications, and the like can be made as long as they do not deviate from the essence of the invention. These embodiments and their modifications are within the scope and spirit of the invention, and are within the scope of the invention described in the claims and their equivalents. Further, the above-described embodiments can be implemented in combination with each other.

### [Description of Reference Numerals]

1: Vehicle heater
1a: Vehicle heater
1b: Vehicle heater
1c: Vehicle heater
1d: Vehicle heater
1e: Vehicle heater
10: Substrate
10a: Surface
10b: Surface
20: Insulating portion
30: Heat generating portion
31: Heat generating element
32: Heat generating element
40: Wiring portion
50: Protection portion
50a: Protection portion
50b: Protection portion
50c: Protection portion
60: Insulating portion
70: Detection portion
80: Wiring portion
90: Protection portion
90a: Protection portion
90b: Protection portion
90c: Protection portion
100: Vehicle heating device
100a: Vehicle heating device
100b: Vehicle heating device
101: Housing
102: Blowing portion
103: Controller
104: Detection portion
G: Gas

## Claims

1. A vehicle heater for heating a gas inside a vehicle, comprising:
a substrate that has a plate shape, has a first surface and a second surface facing the first surface, and extends in one direction;
a heat generating element that is provided on the first surface side and extends in an extension direction of the substrate;
a first detection portion that is provided on the first surface side and detects a temperature of the substrate; and
a first protection portion that covers the first surface side.

2. The vehicle heater according to claim 1,
wherein the first protection portion contains a glass material, and
wherein a maximum height roughness Rz of a surface of the first protection portion satisfies the following formula: 0.3 µm≤Rz≤5 µm.

3. A vehicle heater for heating a gas inside a vehicle, comprising:
a substrate that has a plate shape, has a first surface and a second surface facing the first surface, and extends in one direction;
a heat generating element that is provided in at least one of the first surface side and the second surface side and extends in an extension direction of the substrate;
a first detection portion that is provided in at least one of the first surface side and the second surface side and detects a temperature of the substrate;
a first protection portion that covers the first surface side; and
a second protection portion that covers the second surface side.

4. The vehicle heater according to claim 3,
wherein the first protection portion contains a glass material, and
wherein a maximum height roughness Rz of a surface of the first protection portion satisfies the following formula: 0.3 µm≤Rz≤5 µm.

5. The vehicle heater according to claim 3 or 4,
wherein the second protection portion contains a glass material, and
wherein a maximum height roughness Rz of a surface of the second protection portion satisfies the following formula: 0.3 µm≤Rz≤5 µm.

6. The vehicle heater according to any one of claims 3 to 5, further comprising:
a first insulating portion that is provided in the first surface; and
a second insulating portion that is provided in the second surface,
wherein the substrate contains metal,
wherein at least one of the heat generating element and the first detection portion covered with the first protection portion is provided on the first insulating portion, and
wherein at least one of the heat generating element and the first detection portion covered with the second protection portion is provided on the second insulating portion.

7. The vehicle heater according to any one of claims 3 to 5,
wherein the substrate contains ceramics,
wherein at least one of the heat generating element and the first detection portion covered with the first protection portion is provided on the first surface, and
wherein at least one of the heat generating element and the first detection portion covered with the second protection portion is provided on the second surface.

8. A vehicle heating device comprising:
a housing;
the vehicle heater according to any one of claims 1 to 7 provided inside the housing;
a blowing portion that forms an air current flowing inside the housing provided with the vehicle heater;
a second detection portion that detects a temperature of an atmosphere outside the housing; and
a controller that is electrically connected to the vehicle heater and the second detection portion,
wherein the controller controls heating of the heat generating element based on a difference between the temperature detected by the second detection portion and a set temperature.

9. The vehicle heating device according to claim 8,
wherein the controller further controls heating of the heat generating element based on a temperature detected by the first detection portion provided in the vehicle heater.

10. The vehicle heating device according to claim 8 or 9,
wherein the controller is electrically connected to the blowing portion, and controls a blowing amount of the blowing portion when controlling the heating of the heat generating element.
